# EUROPEAN PATENT SPECIFICATION

(11) **EP 4 245 576 B1**
(45) Date of publication and mention of the grant of the patent: **20.08.2025**
(21) Application number: 21948477.1
(22) Date of filing: 28.10.2021
(51) Int. Cl.: B60C 19/00, B29D 30/00, B60C 13/00

(54) **PNEUMATIC TIRE**
LUFTREIFEN
PNEUMATIQUE

(30) Priority: 30.06.2021 JP 2021109745
(43) Date of publication of application: 20.09.2023
(73) Proprietor: BRIDGESTONE CORPORATION, Chuo-ku Tokyo 104-8340 (JP)
(72) Inventor: OSAKA, Takashi, Tokyo 104-8340 (JP); TAKAMURA, Keiichi, Tokyo 104-8340 (JP)
(74) Representative: Marks & Clerk LLP
(86) International application number: PCT/JP2021/039894
(87) International publication number: WO 2023/276174

(56) References cited:
- JP-A- 2004 013 399
- JP-A- 2008 154 193
- JP-A- 2017 132 292
- JP-A- 2018 505 088
- JP-A- 2019 137 150
- JP-A- 2019 137 150
- JP-A- 2020 079 042
- JP-A- 2020 185 975

## Description

### TECHNICAL FIELD

The present invention relates to a pneumatic tire.

### BACKGROUND

There has been conventionally known a pneumatic tire including a communication device such as a Radio Frequency (RF) tag having a memory or the like to read and write data of manufacturing management, delivery management, usage history management, etc. of the tire (for example, see PTL 1).

JP2019137150A discloses a tire capable of securing a sufficient communication distance and having an IC tag excellent also in durability mounted thereon. An IC tag has an RFID chip electrically connected to a loop antenna on an inlay film, upper-lower surfaces of the inlay film covered with polyimide films, and a vulcanization layer larger than the inlay film disposed on an upper surface of the polyimide film. The IC tag is adhered to a tire by an adhesive layer on an undersurface of the vulcanization layer with its periphery protruding from the polyimide films and an undersurface of the polyimide film on the undersurface side, the IC tag is disposed in a bead part of the tire at a position separated from a rim by 5 mm-20 mm, and the loop antenna of the IC tag is disposed facing the rim side.

### CITATION LIST

### Patent Literature

PTL 1: JP2017531825A

### SUMMARY

### (Technical Problem)

The tire as described above may be unable to read and write the information on the tire as described above when the communication device is separated from the tire or when the communication device breaks down.

It could be helpful to provide a pneumatic tire that prevents information on the tire from being unable to be read and written.

### (Solution to Problem)

We provide:
(1) a pneumatic tire comprising a plurality of communication devices disposed on a sidewall portion, wherein
   one or more of the plurality of communication devices are disposed on one tire width direction half portion bounded by a tire equatorial plane, and one or more of the plurality of communication devices are disposed on the other tire width direction half portion bounded by the tire equatorial plane, and
   the plurality of communication devices are disposed to be separated from one another by 45° or more in a tire circumferential direction when a position of a tire central axis is central, in a side view of the tire.

### (Advantageous Effect)

The invention can provide a pneumatic tire that prevents information on the tire from being unable to be read and written.

### BRIEF DESCRIPTION OF THE DRAWINGS

In the accompanying drawings:
FIG. 1 is a schematic tire width direction cross-sectional view of a pneumatic tire according to one of the disclosed embodiments;
FIG. 2 is a schematic view illustrating one example of the configuration of a communication device;
FIG. 3 is a schematic front view of the pneumatic tire according to one of the embodiments; and
FIG. 4 is a schematic side view of the pneumatic tire according to one of the embodiments.

### DETAILED DESCRIPTION

Hereinafter, embodiments of the present invention will be illustratively described in detail with reference to the drawings.

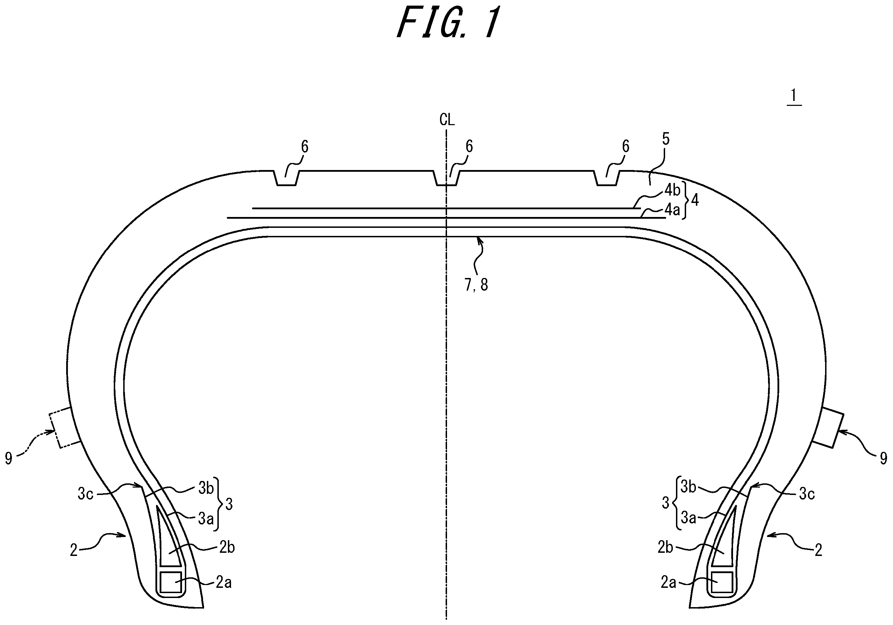

FIG. 1 is a tire width direction cross-sectional view of a pneumatic tire according to one of the disclosed embodiments. As illustrated in FIG. 1, this tire 1 includes: a pair of bead portions 2; a carcass 3 toroidally extending between the pair of bead portions 2; a belt 4 formed by one or more belt layers disposed outward in the tire radial direction of a crown portion of the carcass 3; and a tread 5 disposed outward in the tire radial direction of the belt 4.

In the illustrated example, a bead core 2a is embedded in the bead portion 2, and a bead filler 2b having a substantially triangular cross section is disposed outward in the tire radial direction of the bead core 2a.

In the illustrated example, the carcass 3 is composed of one or more carcass plies. The carcass 3 includes a carcass main body 3a toroidally extending between the pair of bead portions 2, and a carcass turn-up portion 3b that continues from the carcass main body 3a and turns up around the bead core 2a. In the illustrated example, the end of the carcass turn-up portion 3b terminates outward in the tire radial direction with respect to the outward end in the tire radial direction of the bead filler 2b, but the position of the end of the carcass turn-up portion 3b is not limited to this. The cord of the carcass ply is not particularly limited but may be an organic fiber cord.

In the illustrated example, the belt 4 includes two belt layers 4a and 4b and is an inclined belt in which belt cords extend so as to intersect one another between the layers. The angle with respect to the tire circumferential direction of belt cord is not particularly limited but may be, for example, 15° to 60°. The number of layers of the belt layer is not particularly limited so long as there are one or more layers. The material of the belt cord is not particularly limited, and a steel cord may be used.

In the illustrated example, the tread 5 is formed of a single-layer tread rubber but may be formed as a tread having a multi-layer rubber in the tire radial direction or the tire width direction. In the illustrated example, three circumferential main grooves 6 are provided on the tread 5, but the number of the circumferential main grooves, the groove width, the groove depth, the groove shape, etc. are not particularly limited.

In the illustrated example, an inner liner 8 is disposed on a tire inner surface 7. This can prevent the permeation of air and gas.

As illustrated in FIG. 1, this tire 1 includes a plurality of communication devices 9 disposed on a sidewall portion. In this example, the plurality of communication devices 9 are disposed with shifted one another in the tire circumferential direction as described below. Only one communication device 9 is present and illustrated with a solid line at the cross section of FIG. 1. A communication device 9 that is present at another cross section is also illustrated with a dashed line.

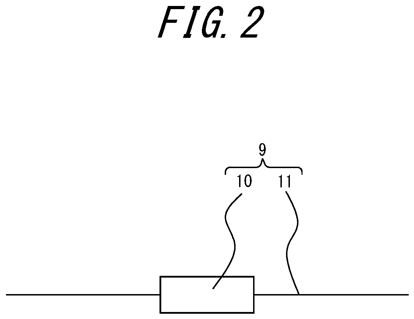

FIG. 2 is a schematic view illustrating one example of the configuration of the communication device. The communication device 9 performs wireless communication. In the illustrated example, the communication device 9 is an RF tag having: one or more (two in the illustrated example) antennas 11 that transmit and/or receive an electromagnetic wave; and an IC chip 10 that has a storage.

In this example, the IC chip 10 has any known memory, the storage and any known processor, a controller. The antenna 11 is connected to the IC chip 10 and extends linearly, wavily, or helicoidally. In this example, two antennas 11 are extending in opposite directions one another. The IC chip 10 may be operated by a dielectric electromotive force generated by the electromagnetic wave received by the one or more antennas 11. That is, the communication device 9 may be a passive communication device. Alternatively, the communication device 9 may further include a battery to allow communication by generating an electromagnetic wave with its own electric power. That is, the communication device 9 may be an active communication device. The communication device 9 can read data of manufacturing management, delivery management, usage history management, etc. of the tire, which has been stored in the storage, or write such data in the storage.

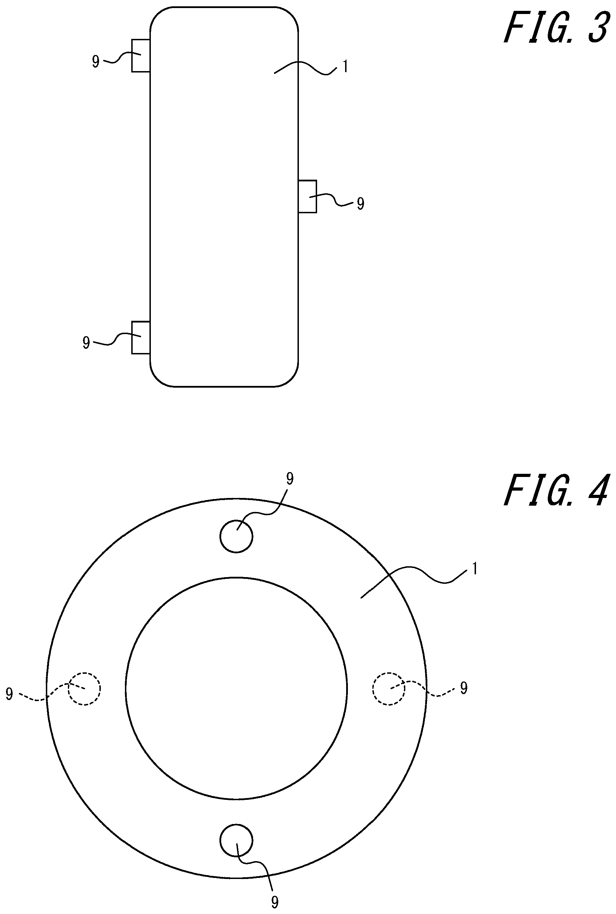

FIG. 3 is a schematic front view of the pneumatic tire according to one of the embodiments. FIG. 4 is a schematic side view of the pneumatic tire according to one of the embodiments. As illustrated in FIG. 3 and FIG. 4, one or more (two in the illustrated example) of the plurality of communication devices 9 are disposed on one tire width direction half portion bounded by a tire equatorial plane CL, and one or more (two in the illustrated example) of the plurality of communication devices 9 are disposed on the other tire width direction half portion bounded by the tire equatorial plane CL. In FIG. 4, the communication devices 9 disposed on one half portion (near side in the drawing) are illustrated with solid lines, while the communication devices 9 disposed on the other half portion (far side in the drawing) are illustrated with dashed lines.

The plurality of communication devices 9 (two communication devices 9 adjacent to one another in the tire circumferential direction) are disposed to be separated from one another by 45° or more (90° at regular intervals in the illustrated example) in the tire circumferential direction when the position of a tire central axis is central, in a side view of the tire, as illustrated in FIG. 4.

Hereinafter, operations and effects of the pneumatic tire of the present embodiment will be described.

In the pneumatic tire of this embodiment, one or more (two in the illustrated example) of the plurality of communication devices 9 are disposed on one tire width direction half portion bounded by the tire equatorial plane CL, and one or more (two in the illustrated example) of the plurality of communication devices 9 are disposed on the other tire width direction half portion bounded by the tire equatorial plane CL. Therefore, for example, even when an event that causes the breakdown or separation of the communication device 9 (e.g., a foreign object flying in and hitting the tire) occurs at any tire width direction half portion and the breakdown or separation of the communication device 9 actually occurs, if the communication device 9 at the other half portion is not affected, the communication device 9 at the other half portion can read and write information on the tire.

The plurality of communication devices 9 are disposed to be separated from one another by 45° or more (90° at regular intervals in the illustrated example) in the tire circumferential direction when the position of the tire central axis is central, in a side view of the tire. Therefore, for example, even when an event that causes the breakdown or separation of the communication device 9 (e.g. deformation due to grounding, or the tire hitting a foreign object) occurs when the tire is rolling, and the breakdown or separation of the communication device 9 actually occurs, this event that causes the breakdown or separation may not occur or the degree of this event may be decreased at the communication device 9 separated by 45° or more in the tire circumferential direction for the reason of, for example, the difference in timing of grounding. Accordingly, the communication device 9 whose position is different by 45° or more in the tire circumferential direction can read and write information on the tire.

As described above, according to the present embodiment, it is possible to prevent information on the tire from being unable to be read and written.

The plurality of communication devices are preferably disposed at regular intervals in the tire circumferential direction. It is because such disposition can equalize the influence of the event that causes the breakdown or separation of the communication device when the tire is rolling, such as deformation including deflection due to grounding, to further ensure any of the communication devices be left with fulfilling the function.

In the disposition at regular intervals in the tire circumferential direction, it does not matter at which tire width direction half portion the communication devices are positioned. Therefore, for example, FIG. 4 illustrates an example in which four communication devices are disposed at regular intervals by 90° in the tire circumferential direction.

The plurality of communication devices 9 (two communication devices 9 adjacent to one another in the tire circumferential direction) do not necessarily have to be disposed at regular intervals in the tire circumferential direction as long as the plurality of communication devices 9 are separated from one another by 45° or more in the tire circumferential direction when the position of the tire central axis is central, in a side view of the tire.

As illustrated in FIG. 3 and FIG. 4, the communication devices disposed on one tire width direction half portion and the communication devices disposed on the other tire width direction half portion are preferably alternately arranged in the tire circumferential direction. It is because when an event that causes the breakdown or the like occurs at one communication device, another communication device adjacent to the one communication device in the tire circumferential direction will be positioned at the tire width direction half portion different from the tire width direction half portion at which the one communication device is positioned, and this can avoid as much as possible the influence of the event that causes the breakdown or the like on the other communication device.

However, the tire of this invention is not limited to this case, and the communication devices may be disposed on one tire width direction half portion and the other tire width direction half portion one by one.

The tire 1 preferably includes even number of the communication devices. It is because equalizing the number of the communication devices disposed on one tire width direction half portion and the number of the communication devices disposed on the other tire width direction half portion can further equalize the influence of the event that causes the breakdown. However, the tire 1 may include odd number of communication devices.

In this embodiment, the communication device 9 is attached to the surface of the sidewall portion of the tire 1. In this example, the communication device 9 is attached to the surface of the sidewall portion via an adhesion layer (not illustrated). Any known adhesive can be used for the adhesion layer. As another example, the communication device 9 may be embedded in the sidewall portion.

In this example, the communication device 9 is positioned outward in the tire radial direction with respect to the end of the carcass turn-up portion 3b but is positioned inward in the tire radial direction with respect to a tire maximum width portion (part where the tire width in the tire width direction is maximum in a cross sectional view of FIG. 1). This can cause the carcass to reduce inhibition of transmitting and receiving of the electromagnetic wave and can increase durability of the communication device by avoiding a part near a buttress portion where deformation is large. On the other hand, the disposition of the communication device 9 is not limited to this example. The communication device 9 may be positioned inward in the tire radial direction with respect to the end of the carcass turn-up portion 3b. The communication device 9 may be positioned outward in the tire radial direction with respect to the tire maximum width portion.

The pneumatic tire of this invention is particularly suitable for a passenger vehicle tire or a tire for a truck or bus.

### REFERENCE SIGNS LIST

- 1: tire
- 2: bead portion
- 3: carcass
- 4: belt
- 5: tread
- 6: circumferential main groove
- 7: tire inner surface
- 8: inner liner
- 9: communication device
- 10: IC chip
- 11: antenna

## Claims

1. A pneumatic tire (1) comprising a plurality of communication devices (9) disposed on a sidewall portion, wherein
one or more of the plurality of communication devices are disposed on one tire width direction half portion bounded by a tire equatorial plane (CL), and
the plurality of communication devices are disposed to be separated from one another by 45° or more in a tire circumferential direction when a position of a tire central axis is central, in a side view of the tire; **characterised in that**
one or more of the plurality of communication devices are disposed on the other tire width direction half portion bounded by the tire equatorial plane.

2. The pneumatic tire (1) according to claim 1, wherein the plurality of communication devices (9) are disposed at regular intervals in the tire circumferential direction.

3. The pneumatic tire (1) according to claim 1 or 2, wherein the communication devices (9) disposed on the one half portion and the communication devices disposed on the other half portion are alternately arranged in the tire circumferential direction.

4. The pneumatic tire (1) according to any one of claims 1 to 3, comprising an even number of the communication devices.

## Patentansprüche

1. Luftreifen (1), der eine Vielzahl von Kommunikationseinrichtungen (9) umfasst, die auf einem Seitenwandabschnitt angeordnet sind, wobei
eine oder mehrere von der Vielzahl von Kommunikationseinrichtungen auf einem halben Abschnitt in Reifenbreitenrichtung, der durch eine Reifenäquatorialebene (CL) begrenzt wird, angeordnet sind und
die Vielzahl von Kommunikationseinrichtungen so angeordnet ist, dass sie, in einer Seitenansicht des Reifens, um 45° oder mehr in einer Reifenumfangsrichtung voneinander getrennt sind, wenn eine Position einer Reifenmittelachse mittig ist, **dadurch gekennzeichnet, dass**
eine oder mehrere von der Vielzahl von Kommunikationseinrichtungen auf dem anderen halben Abschnitt in Reifenbreitenrichtung, der durch die Reifenäquatorialebene begrenzt wird, angeordnet sind.

2. Luftreifen (1) nach Anspruch 1, wobei die Vielzahl von Kommunikationseinrichtungen (9) in regelmäßigen Abständen in der Reifenumfangsrichtung angeordnet ist.

3. Luftreifen (1) nach Anspruch 1 oder 2, wobei die Kommunikationseinrichtungen (9), die sich auf dem einen halben Abschnitt befinden, und die Kommunikationseinrichtungen, die sich auf dem anderen halben Abschnitt befinden, abwechselnd in der Reifenumfangsrichtung angeordnet sind.

4. Luftreifen (1) nach einem der Ansprüche 1 bis 3, der eine gerade Anzahl der Kommunikationseinrichtungen umfasst.

## Revendications

1. Pneumatique (1) comprenant une pluralité de dispositifs de communication (9) disposés sur une partie de paroi latérale, dans lequel
un ou plusieurs de la pluralité de dispositifs de communication sont disposés sur une demi-partie dans la direction de la largeur du pneu délimitée par un plan équatorial de pneu (CL), et
la pluralité de dispositifs de communication sont disposés de manière à être mutuellement séparés de 45° ou plus dans une direction circonférentielle de pneu lorsqu'une position d'un axe central de pneu est centrale, selon une vue latérale du pneu ; **caractérisé en ce que** :
un ou plusieurs de la pluralité de dispositifs de communication sont disposés sur l'autre demi-partie dans la direction de la largeur du pneu délimitée par le plan équatorial de pneu.

2. Pneumatique (1) selon la revendication 1, dans lequel la pluralité de dispositifs de communication (9) sont disposés selon des intervalles réguliers dans la direction circonférentielle du pneu.

3. Pneumatique (1) selon la revendication 1 ou 2, dans lequel les dispositifs de communication (9) disposés sur la demi-partie et les dispositifs de communication disposés sur l'autre demi-partie sont agencés en alternance dans la direction circonférentielle du pneu.

4. Pneumatique (1) selon l'une quelconque des revendications 1 à 3, comprenant un nombre pair des dispositifs de communication.
